# FASCICULE DE BREVET EUROPEEN

(11) **EP 3 475 864 B1**
(45) Date de publication et mention de la délivrance du brevet: **24.11.2021**
(21) Numéro de dépôt: 16733446.5
(22) Date de dépôt: 27.06.2016
(51) Int. Cl.: G06F 21/16, G06F 13/42, G06F 21/00, G06F 13/16

(54) **BOITIER POUR LA GESTION DES INFORMATIONS TECHNIQUES D'UN SITE**
GEHÄUSE FÜR DIE VERWALTUNG VON INFORMATIONEN ZU EINEM INDUSTRIESTANDORT
CASING FOR MANAGING TECHNICAL INFORMATION OF A SITE

(43) Date de publication de la demande: 01.05.2019
(73) Titulaire: E-GLOO DEVELOPMENT, 1130 Luxembourg (LU)
(72) Inventeur: BLANCHET, Bernard, 78000 Versailles (FR); DE LEDINGHEN, Edouard, 14250 Tessel (FR); LAURENT, Lionel, 78490 Montfort l'Amaury (FR)
(74) Mandataire: IP Trust
(86) Numéro de dépôt international: PCT/EP2016/064813
(87) Numéro de publication internationale: WO 2018/001446

(56) Documents cités:
- EP-A2- 1 801 800
- US-A1- 2009 300 238
- US-A1- 2011 119 429
- US-B2- 8 452 934
- Rich Gates: "USB Powered Gadgets and more.. > How To: Make a USB Read Only", getusb.info/, 3 March 2015 (2015-03-03), XP055706675, Retrieved from the Internet: URL:https://www.getusb.info/how-to-make-a- usb-read-only/ [retrieved on 2020-06-19]
- nexcopy: "Nexcopy USB Copy Protection Video", , 7 October 2014 (2014-10-07), pages 1-6, XP054980593, Retrieved from the Internet: URL:https://www.youtube.com/watch?v=t5CBtt oN72s [retrieved on 2020-06-19]

## Description

### Domaine de l'invention

La présente invention concerne le domaine des équipements pour l'archivage sur site des documents numériques concernant par exemple le plan d'un bâtiment, d'un site industriel, d'une plateforme marine, d'un navire, de son installation électrique, des dossiers des ouvrages exécutés, du cahier de visite, des plans des installations techniques, de ses équipements et de ses sous-ensembles, et plus généralement de tous les documents qu'il est utile voire obligatoire d'archiver et afin de permettre la consultation et la mise à jour sur site.

### Etat de la technique

On connait dans l'état de la technique le brevet européen EP2137799 décrivant un boitier pour la sauvegarde d'informations techniques par un utilisateur, ledit boitier étant destiné à être fixé dans une armoire technique, et notamment destiné à être fixé sur un rail métallique, ledit boitier comprenant une ouverture frontale qui peut être fermée par un moyen de fermeture, tel qu'un couvercle ou un capot, et comprenant en outre des moyens de fixation permettant de fixer ledit boitier (1) dans ladite armoire technique, et avantageusement sur ledit rail métallique, et ledit boitier étant caractérisé en qu'il comprend en outre
(a) au moins un moyen de protection antimagnétique et / ou antistatique, et
(b) un support réenregistrable de stockage de données informatiques, ledit support de stockage étant une mémoire de type clef USB comportant une prise USB, fixée dans le boitier ou dans son moyen de fermeture, de manière à ce que sa prise USB soit accessible après l'ouverture dudit moyen de
fermeture, et étant protégé par ledit moyen de protection antimagnétique et/ou antistatique.

Ce brevet propose dans une variante une mémoire de type ROM (Read-Only Memory), programmée ou utilisée de manière à permettre l'empilement d'informations nouvelles, sans pouvoir effacer les anciennes.

Ce document de l'art antérieur propose de manière optionnelle l'utilisation d'un mot de passe pour un premier mode d'accès. Un deuxième mode d'accès permet à l'utilisateur de lire et d'écrire les données contenues dans ce support informatique. Pour accéder à ce mode d'accès, un mot de passe est obligatoire. L'accès au support informatique peut se faire par l'intermédiaire d'une connexion réseau, par exemple via une prise réseau, qui peut être de type RJ45. Il prévoit un troisième mode d'accès, réservé au constructeur du modèle ou son préposé, c'est-à-dire à un utilisateur spécialement habilité, visant à faciliter la maintenance informatique et permettant d'accéder à l'ensemble des données sans connaitre le deux mots de passes indiqués ci-dessus.

### Inconvénient de l'art antérieur

La solution proposée dans l'art antérieur n'est pas satisfaisante.

En premier lieu, ce dispositif ne peut pas fonctionner : une mémoire de type clé USB décrite dans ce brevet ne peut présenter que deux états : soit lecture-écriture libre; soit lecture seule. Une mémoire de clé USB ne permet pas de différencier l'état en fonction de la nature des informations, et ne permet donc pas d'obtenir l'effet annoncé de « permettre l'empilement de données nouvelles sans pouvoir effacer les anciennes ».

En second lieu, la sécurisation du fonctionnement nécessite l'emploi d'un applicatif (« driver ») spécifique, comprenant les ressources de gestion de mots de passe.

Cela présente deux inconvénients.

D'abord, la sécurité n'est pas réellement assurée car la mémoire de type USB reste accessible par un terminal sans l'applicatif en question, et ce terminal peut alors lire et écrire librement toutes les données qu'il souhaite sur la mémoire en question.

Ensuite, l'utilisateur qui souhaite se conformer aux spécifications du fournisseur du boîtier doit installer l'applicatif en question sur son terminal, ce qui n'est pas sans difficultés en raison d'une part de la diversité des systèmes d'exploitation, de leur évolution dans le temps, et d'autre part car beaucoup d'entreprises interdisent réglementairement ou techniquement l'installation d'applicatifs qui n'ont pas été expressément approuvés par la direction informatique.

### Solution apportée par l'invention

Afin de remédier aux inconvénients de l'art antérieur, la présente invention concerne selon son acception la plus générale un boitier pour la gestion [sauvegarde initiale, sauvegardes ultérieures, lecture] des informations techniques [plans, figures, manuels, carnets de visite, les dossiers des ouvrages exécutés (D.O.E.), dossier de maintenance] d'un site [bâtiment, navire, plateforme, équipement industriel,...] constitué par une enveloppe intégrant un circuit électronique comportant une mémoire non volatile, un connecteur USB et un processeur commandé par un microprogramme commandant la gestion des entrées-sorties et de ladite mémoire, caractérisé en ce que

Ledit microprogramme comporte des moyens pour gérer les entrées-sorties selon le protocole standard USB, et pour interdire en outre la commande de modification des informations préalablement enregistrées dans ladite mémoire non volatile.

Avantageusement, ledit moyen pour interdire la modification des informations préalablement enregistrées comprend une mémoire pour l'enregistrement d'une table d'adressage contenant les adresses des informations préalablement enregistrées, le microprogramme comportant un code pour comparer l'adresse cible dans le paquet de données reçu via le connecteur USB et pour interdire l'inscription si ladite adresse cible appartient à ladite table d'adressage.

Selon une variante préférée, ledit boitier est dépourvu de source d'alimentation autre que l'alimentation via le port USB.

De préférence, ledit boitier est scellé lors de l'assemblage.

Selon un mode de réalisation avantageux, ledit boitier est étanche.

De préférence, ledit boitier est injecté en un matériau polymère thermoplastique haute performance de type aliphatic Polyketone (dénomé PK).

Avantageusement le port USB est formé par un câble connecté sur le circuit imprimé supportant les circuits électroniques d'une part, et présentant un connecteur USB mâle d'autre part.

A titre d'exemple, ledit câble USB est du type double blindage avec une gaine isolante de type Polyuréthane.

### Description détaillée d'un exemple non limitatif de réalisation

La présente invention sera mieux comprise à la lecture d'un exemple non limitatif de réalisation se référant aux dessins annexés où :

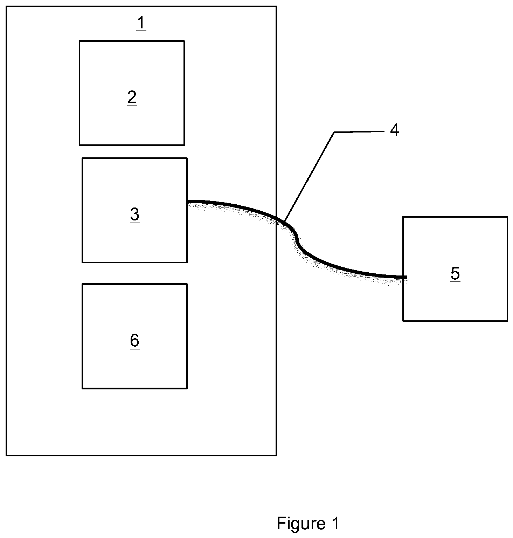

- la figure 1 représente l'architecture matérielle d'un exemple de réalisation de l'invention.

### Architecture matérielle

Le boitier (1) est un boitier thermoplastique rigide, par exemple de type polymère aliphatic Polyketone (dénomé PK), d'une dimension de 150 millimètres de large, 250 millimètres de long et 50 millimètres d'épaisseur.

Il contient un circuit imprimé sur lequel est monté une mémoire non volatile (2), par exemple une mémoire flash, ainsi qu'un microcontrôleur (3), et en option une mémoire volatile additionnelle (6). Un câble (4) relie le circuit imprimé à un connecteur de type USB mâle (5).

Ce microcontrôleur (3) est par exemple un composant de la famille PIC 18 de la société MICROCHIP comprenant un jeu de 75 instructions. Cette palette d'instructions étendue permet de faire fonctionner du code C compilé de manière efficace et intégrant l'USB.

### Architecture fonctionnelle

Le standard USB utilise une paire de transmission différentielle pour les données. Celle-ci étant codé selon un mode NRZI. Sur les appareils à vitesse basse et pleine un '1' différentiel est transmis en mettant D+ au dessus de 2,8V grâce à une résistance de 15k ohms relié à la masse et D- en dessous de 0,3V avec une résistance de 1,5k ohms relié à 3,6V. D'autre part un différentiel '0' correspond à D- plus grand que 2,8V et D+ inférieur à 0,3V avec les mêmes résistances de rappel état haut/bas adéquates.

Le récepteur défini un différentiel '1' avec D+ plus grand de 200 mV que D- et un différentiel '0' avec D+ plus petit de 200 mV que D-. La polarité du signal est inversée en fonction de la vitesse du BUS. En conséquence les états référencés par les termes 'J' et 'K' sont utilisés pour signifier les niveaux logiques. En vitesse basse, un état 'J' est un différentiel '0'. En vitesse haute, un état 'J' est un différentiel '1' .

Les émetteurs / récepteurs USB comprendront à la fois des sorties différentiels et uniques (non complémentaires). Certains états de BUS USB sont indiqués par des signaux à sorties uniques (single ended zero) sur D+, D-ou les deux. Par exemple un zéro à sorties uniques ou SE0 peut être utilisé pour signifier la réinitialisation d'un appareil s'il est maintenu plus de 10 ms. On génère un SE0 en maintenant D+ et D- en position basse (inférieur à 0,3V). Les sorties uniques et différentielles sont importantes d'être notées si vous utilisez un émetteurs / récepteurs et un FPGA comme appareil USB. Il est insuffisant de seulement échantillonner la sortie différentielle.

Le BUS basse et pleine vitesse a une impédance caractéristique de 90 Ohms +/-15%. La sélection des résistances des caractéristiques électriques séries pour D+ et D- est donc importante afin d'équilibrer l'impédance. Toute documentation technique devrait spécifier ces valeurs et tolérances.

Le mode vitesse haute (480 Mbits/s) utilise un courant constant de 17,78 mA pour demander de réduire le bruit.

Une spécificité importante de l'invention est de permettre le fonctionnement avec un terminal quelconque sans nécessiter d'applicatif dédié. Le microcontrôleur est programmé pour gérer l'étape d'énumération qui permet de déterminer l'appareil qui vient juste d'être branché au bus de l'équipement hôte, quelque soit son système d'exploitation, et les paramètres dont il a besoin, comme la consommation électrique, le nombre et le type de terminaison, la classe du produit, etc....

Chaque transaction USB consiste d'un :
- Paquet Jeton (Token) ( en tête définissant ce qu'il attend par la suite )
- Paquet DATA optionnel ( contenant la " charge utile " (payload))
- Paquet d'Etat ( utilisé pour valider les transactions et pour fournir des moyens de corrections d'erreurs).

L'USB est un Bus géré par l'hôte. L'hôte initie toutes les transactions. Le premier paquet, aussi appelé Jeton est produit par l'hôte pour décrire ce qui va suivre et si la transaction de données sera en lecture ou écriture et ce que sera l'adresse de l'appareil et la terminaison désignée. Le paquet suivant est généralement un paquet de données transportant la " charge utile " et est suivi par un paquet " poignée de mains " (handShaking), signalant si les données ou le jeton ont été reçus correctement ou si la terminaison est bloquée, ou n'est pas disponible pour accepter de données.

Le microcontrôleur (2) analyse le contenu du paquet Jeton pour vérifier s'il contient une adresse cible figurant déjà dans la table d'adressage (6).

Si c'est le cas, le microcontrôleur interrompt le processus d'enregistrement des données dans la mémoire non volatile 2. Sinon, il commande la poursuite du processus d'enregistrement à une adresse libre, et enregistre dans la table d'adressage l'adresse à laquelle sont enregistrées les données pour la première fois.

## Revendications

1. - Boîtier pour la gestion, la gestion incluant par exemple, une sauvegarde initiale, des sauvegardes ultérieures, une lecture, d'informations techniques, telles que plans, figures, manuels, carnet de visite, dossiers des ouvrages exécutés, dossier de maintenance, d'un site, comme un bâtiment, un navire, une plateforme, équipement industriel, ledit boiter étant constitué par une enveloppe intégrant un circuit électronique comportant une mémoire non volatile, un connecteur USB et un processeur commandé par un microprogramme commandant la gestion des entrées-sorties et de ladite mémoire,
où ledit microprogramme comporte des moyens pour gérer les entrées-sorties selon le protocole standard USB, et pour interdire en outre la commande de modification des informations préalablement enregistrées dans ladite mémoire non volatile,
**caractérisé en ce que** ledit moyen pour interdire la modification des informations préalablement enregistrées comprend une mémoire pour l'enregistrement d'une table d'adressage contenant les adresses des informations préalablement enregistrées, le microprogramme comportant un code pour comparer l'adresse cible dans le paquet de données reçu via le connecteur USB, pour interdire l'inscription si ladite adresse cible appartient à ladite table d'adressage, et sinon, pour autoriser l ' inscription et enregistrer dans la table d'adressage ladite adresse cible.

2. - Boitier pour la gestion des informations techniques d'un site selon la revendication 1 où ledit boitier est dépourvu de source d'alimentation autre que l'alimentation via le port USB.

3. - Boitier pour la gestion des informations techniques d'un site selon la revendication 1 où ledit boitier est scellé lors de l'assemblage.

4. - Boîtier pour la gestion des informations techniques d'un site selon la revendication 1 où ledit boitier est étanche.

5. - Boitier pour la gestion des informations techniques d'un site selon la revendication 1 où ledit boitier est injecté en un matériau thermoplastique haute performance de type polymère aliphatic Polyketone (dénomé PK) pouvant être ignifugé.

6. - Boitier pour la gestion des informations techniques d'un site selon la revendication 1 où le port USB est formé par un câble connecté sur le circuit imprimé supportant les circuits électroniques d'une part, et présentant un connecteur USB mâle d'autre part.

7. - Boitier pour la gestion des informations techniques d'un site selon la revendication précédente où ledit câble USB est du type double blindage avec une gaine isolante de type Polyuréthane.

## Patentansprüche

1. Box für die Verwaltung, wobei die Verwaltung beispielsweise eine anfängliche Sicherheitskopie, nachfolgende Sicherheitskopien, ein Lesen technischer Informationen beinhaltet, wie Pläne, Zeichnungen, Handbücher, Besuchsheft, Verzeichnis der ausgeführten Arbeiten *(dossiers des ouvrages executes* - DOE), Wartungsverzeichnis eines Standorts, wie ein Gebäude, ein Schiff, eine Plattform, Industrieanlage, wobei die Box aus einer Hülle besteht, in der eine elektronische Schaltung integriert ist, umfassend einen nicht-flüchtigen Speicher, einen USB-Anschluss und einen Prozessor, der von einem Mikroprogramm gesteuert wird, das die Verwaltung der Ein- und Ausgänge und des Speichers steuert, wobei
das Mikroprogramm Mittel umfasst, um die Eingänge/Ausgänge gemäß dem standardmäßigen USB-Protokoll zu verwalten und um ferner eine Änderung von zuvor aufgezeichneten Informationen in dem nicht-flüchtigen Speicher zu unterbinden,
**dadurch gekennzeichnet, dass** das Mittel zum Unterbinden einer Änderung der zuvor aufgezeichneten Informationen einen Speicher zur Aufzeichnung einer Adressierungstabelle umfasst, die die Adressen der zuvor aufgezeichneten Informationen enthält, das Mikroprogramm umfassend einen Code zum Vergleichen der Zieladresse in dem über den USB-Anschluss empfangenen Datenpaket, um das Schreiben zu unterbinden, wenn die Zieladresse in der Adressierungstabelle enthalten ist, und anderenfalls das Schreiben zu autorisieren und die Zieladresse in der Adressierungstabelle aufzuzeichnen.

2. Box für die Verwaltung von technischen Informationen eines Standorts nach Anspruch 1, wobei die Box über keine andere Stromquelle als die Stromversorgung über den USB-Anschluss verfügt.

3. Box für die Verwaltung von technischen Informationen eines Standorts nach Anspruch 1, wobei die Box während des Zusammenbaus versiegelt wird.

4. Box für die Verwaltung von technischen Informationen eines Standorts nach Anspruch 1, wobei die Box wasserdicht ist.

5. Box für Verwaltung von technischen Informationen eines Standorts nach Anspruch 1, wobei die Box in ein thermoplastisches Hochleistungsmaterial vom Typ aliphatisches Polyketon-Polymer (bezeichnet als PK) eingespritzt ist, das feuerfest sein kann.

6. Box für die Verwaltung von technischen Informationen eines Standorts nach Anspruch 1, wobei der USB-Anschluss durch ein Kabel gebildet ist, das einerseits mit der Leiterplatte verbunden ist, die die elektronischen Schaltungen trägt, und andererseits einen USB-Stecker aufweist.

7. Box für die Verwaltung von technischen Informationen eines Standorts nach dem vorherigen Anspruch, wobei das USB-Kabel vom Typ doppelte Abschirmung mit einer isolierenden Hülle vom Typ Polyurethan ist.

## Claims

1. - Unit for managing (managing including, for example, an initial backup, subsequent backups, reading) technical information such as plans, figures, manuals, a visitors book, as-built documentation, or a maintenance file, of a site such as a building, a ship, a platform, or an industrial facility, said unit consisting of a case incorporating an electronic circuit comprising a non-volatile memory, a USB connector, and a processor controlled by a microprogram controlling the management of the inputs and outputs and of said memory,
said microprogram comprising means for managing the inputs and outputs according to the standard USB protocol and for preventing the modification of information previously recorded in said non-volatile memory,
**characterized in that** said means for preventing the modification of the previously recorded information comprises a memory for recording an addressing table containing the addresses of previously recorded information, the microprogram comprising a code for comparing the target address in the data package received via the USB connector for preventing registration if said target address belongs to said addressing table, and if not, for authorizing registration and recording said target address in the addressing table.

2. - Unit for managing technical information of a site according to claim 1, wherein said unit has no power supply other than the power supply via the USB port.

3. - Unit for managing technical information of a site according to claim 1, wherein said unit is sealed during assembly.

4. - Unit for managing technical information of a site according to claim 1, wherein said unit is watertight.

5. - Unit for managing technical information of a site according to claim 1, wherein said unit is injection-moldedin a high-performance thermoplastic material of the aliphatic polyketone (PK) polymer type which can be flame retardant.

6. - Unit for managing technical information of a site according to claim 1, wherein the USB port is formed by a cable which is connected to the printed circuit supporting the electronic circuits and has a male USB connector.

7. - Unit for managing technical information of a site according to the preceding claim, wherein said USB cable is double shielding having an insulating polyurethane sheath.
